# EUROPEAN PATENT SPECIFICATION

(11) **EP 3 691 878 B1**
(45) Date of publication and mention of the grant of the patent: **04.12.2024**
(21) Application number: 18779695.8
(22) Date of filing: 04.10.2018
(51) Int. Cl.: B29C 70/24, F17C 1/16, F17C 1/06

(54) **PRESSURE VESSEL AND METHOD FOR FORMING AN OUTER LAYER OF A PRESSURE VESSEL**
DRUCKBEHÄLTER UND VERFAHREN ZUR HERSTELLUNG EINER AUSSENSCHICHT EINES DRUCKBEHÄLTERS
RÉCIPIENT SOUS PRESSION ET PROCÉDÉ DE FORMATION D'UNE COUCHE EXTERNE D'UN RÉCIPIENT SOUS PRESSION

(30) Priority: 04.10.2017 EP 17306327
(43) Date of publication of application: 12.08.2020
(73) Proprietor: PLASTIC OMNIUM NEW ENERGIES FRANCE, 69007 Lyon (FR)
(72) Inventor: PERROT, Alice, 1070 Anderlecht (BE); CRIEL, Bjorn, 1750 Sint-Martens-Lennik (BE)
(74) Representative: LLR
(86) International application number: PCT/EP2018/077005
(87) International publication number: WO 2019/068813

(56) References cited:
- DE-A1- 102010 033 623
- JP-A- 2005 113 963
- US-A1- 2005 077 643
- US-A1- 2009 314 872

## Description

### Field of Invention

The field of the invention relates to the manufacturing of pressure vessels by wrapping an outer layer around a liner. Particular embodiments relate to a method for forming an outer layer to be arranged around a liner of a pressure vessel, to a pressure vessel manufactured according to the method, and to an apparatus used for manufacturing a pressure vessel.

### Background

Existing methods for manufacturing pressure vessels, such as CNG (Compressed Natural Gas) tanks, CHG (Compressed Hydrogen Gas) tanks, LPG (Liquefied Petroleum Gas) tanks or the like, produce a relatively light weight vessel by forming a fibre reinforced plastics (FRP) layer on the periphery of a hollow cylindrical liner.

A first prior art method lays a circumferential winding, also called a hoop winding or a helical winding around the liner. Two types may be distinguished: a FW (Filament Winding) method and a TW (Tape Winding) method. The FW method may be a method in which fibre bundles are impregnated with resin beforehand to prepare a tow shaped prepreg and an FRP layer is formed by winding the tow shaped prepreg on the liner, or a method in which fibre bundles which are fed in a predetermined direction are impregnated with resin to be wound around a liner. The TW method is a method in which a tape shaped prepreg is wound around the liner to form an FRP layer. In such embodiments, typically the liner or the mandrel is rotated to apply a filament or tape from a spool. For a hoop winding, the winding angle is typically between 80 and 100 degrees, e.g. just below 90 degrees. For a helical winding the winding angle may be e.g. between 10 and 60 degrees.

A second prior art method is the so-called "braiding" method in which a braider is used to form a body on the periphery of the liner by braiding a plurality of fibre bundles, and the body is impregnated with resin to be cured to form the FRP layer. The braiding method shortens the manufacturing time and reduces the manufacturing cost of the pressure vessel compared with the case of applying the FW method or the TW method, because the entire braided layer can be laid in one pass.

In vessels with a braided outer layer, typically the intrinsic fibre tensile properties are not fully used because of the crimp effect (also called the waviness effect) which is caused by the fibres crossing each in a conventional braided layer.

US2005077643A1 discloses a pressure container produced by forming an outer shell made of a fiber reinforced composite material on a periphery of a liner; preparing large diameter fiber bundle unimpregnated with a resin, and small diameter resin bundle and a thermoplastic resin covering the small diameter resin bundle; and forming a body on periphery of the liner by braiding the fiber bundles with a braider.

### Summary

Embodiments of the invention aim to provide a method allowing to use the intrinsic fibre tensile properties in an improved manner such that the amount of fibres needed for producing a pressure vessel with a predetermined strength can be reduced.

According to a first aspect of the invention, there is provided a method for forming an outer layer around a cylindrical portion of a liner, in order to obtain a pressure vessel. The method comprises:
- forming at least a first hoop layer of one or more first fibre bundles arranged with a first fibre angle between 80 and 100 degrees with respect to the axial direction of the cylindrical portion;
- forming at least a first substantially unidirectional layer of one or more second fibre bundles arranged with a second fibre angle between +5 and -5 degrees with respect to the axial direction of the cylindrical portion; wherein the one or more second fibre bundles are laid adjacent to each other so as to form a continuous first substantially unidirectional layer, preferably with a cover factor of at least 95% such that the first substantially unidirectional layer has a substantially even thickness on the cylindrical portion of the liner; wherein the forming of the first substantially unidirectional layer is done using a braiding machine.

The first hoop layer is arranged to resist the radial pressure and the first substantially unidirectional layer is arranged to resist the axial pressure. Further, both a hoop layer and a unidirectional layer have the advantage that they can be laid down with a small amount of crimp (waviness) as the fibres do not have to cross. By combining a hoop layer with a unidirectional layer the fibre tensile properties can be used in an improved manner resulting in a reduction of the amount of fibres needed for producing a pressure vessel with a predetermined strength can be reduced. Also, by using a braiding machine to produce the first unidirectional layer a fast production process is obtained.

In the context of the present application the term "forming" or "wrapping" refers to all types of forming, e.g. filament winding, braiding, etc. In other words the hoop layer may be a filament winding layer, a braided layer, etc.

In the context of the present application, the expression "unidirectional layer" refers to a layer in which all the fibres are substantially oriented in the same direction, thus the bundles of fibres are also substantially oriented in the same direction. In other words, the fibres or the bundles of fibres are substantially parallel and do not intersect.

Furthermore, it should be understood that "laid adjacent to each other" means that there can be contact or no contact between the bundles, preferably contact. In other words in this preferred embodiment, the word "adjacent" is to be understood as "in contact with each other".

In embodiments of the invention one or more hoop layers may be combined with one or more substantially unidirectional layers, in accordance with a particular balance between the fibre content in the one or more hoop layers and the fibre content in the one or more substantially unidirectional layers, in order to further reduce the amount of fibres.

It is noted that, a substantially unidirectional layer may be applied below and/or on top of a hoop layer. In other words, any sequence of hoop layers and substantially unidirectional layers is possible, e.g. liner - hoop layer - substantially unidirectional layer, liner - substantially unidirectional layer - hoop layer, liner - hoop layer - substantially unidirectional layer - hoop layer, liner - substantially unidirectional layer - hoop layer, etc.

According to an exemplary embodiment, the one or more second fibre bundles are arranged such that the crimp thereof is minimized. Preferably, when A is the "height" of the wave of a fibre, i.e. the deviation of the centre of the fibre compared to the centre of a fibre in a straight direction, and L is the "length" of the wave, then A/L < 0,03 and more preferably A/L < 0,01. Even more preferably, to minimize the effect of the crimp on the tensile properties, the ratio A/L is as small as possible.

According to an exemplary embodiment, the cover factor of the first substantially unidirectional layer is at least 98%, more preferably 100%. This will further enhance the absorption of the axial forces with a minimal amount of fibres.

According to an exemplary embodiment, the first fibre angle is between 82 and 98 degrees, more preferably between 85 and 95 degrees. This will further improve the resistance of the pressure vessel to axial pressure.

According to an exemplary embodiment, the second fibre angle is between -3 and 3 degrees, more preferably between -2 and 2 degrees, even more preferably between -1 and 1 degrees, e.g. approximately 0 degrees. This will further improve the resistance of the pressure vessel to radial pressure.

According to an exemplary embodiment the braiding machine has weft spools and warp spools, and the one or more second fibre bundles of the first substantially unidirectional layer are arranged on a number of spools of the weft and/or warp spools, and said number of spools are not rotated whilst moving the liner through the braiding machine in order to apply the first substantially unidirectional layer.

According to another exemplary embodiment the braiding machine has a stem yarn application means and one or more second fibre bundles of the first substantially unidirectional layer are arranged using the stem yarn application means. In such an embodiment, optionally one or more auxiliary fibre bundles may be arranged on a number of spools of the weft and/or warp spools of the braiding machine, said one or more auxiliary fibre bundles having a diameter which is at least 5 times less, preferably at least 10 times less than the diameter of the one or more second fibre bundles. By using a thin auxiliary fibre bundle the one or more second fibre bundles may better follow the profile of the liner whilst not significantly increasing the crimp effect. Indeed, because the auxiliary fibre bundles are much thinner, the effect of crossing over the secondary fibre bundles will be very small.

According to an exemplary embodiment the forming of at least a first substantially unidirectional layer comprises forming of multiple substantially unidirectional layers by reciprocating the liner in the braiding machine. In that manner multiple substantially unidirectional layers can be applied in as fast manner.

According to an exemplary embodiment the method further comprises the forming of at least the first hoop layer is done with a braiding assembly comprising weft and warp spools, wherein only one or more warp spools or only one or more weft spools are used to apply the one or more first fibre bundles. According to another exemplary embodiment the method further comprises the forming of at least the first hoop layer is done using a filament winding assembly, and wherein the liner is rotated whilst moving through the filament winding assembly.

According to an exemplary embodiment the method further comprises forming at least a first helical winding layer of one or more third bundles arranged with a third fibre angle between 3 and 80 degrees with respect to the axial direction of the cylindrical portion; wherein preferably the one or more third bundles are arranged adjacent to each other so as to form a continuous first helical winding layer.

According to an exemplary embodiment the method further comprises forming a second helical winding layer of one or more fourth bundles arranged with a fourth fibre angle between 3 and 80 degrees with respect to the axial direction of the cylindrical portion; wherein the one or more fourth bundles are arranged adjacent to each other so as to form a continuous second helical winding layer; wherein the one or more third fibre bundles of the first helical winding layer are oriented in a first direction; and wherein the one or more fourth fibre bundles of the first helical winding layer are oriented in a second direction which is different from the first direction.

According to a possible embodiment, the one or more third fibre bundles and/or fourth fibre bundles are arranged such that the crimp thereof is minimized. Preferably, when A is the "height" of the wave of a fibre, i.e. the deviation of the centre of the fibre compared to the centre of a fibre in a straight direction, and L is the "length" of the wave, then A/L < 0,03 and more preferably A/L < 0,01. Even more preferably, to minimize the effect of the crimp on the tensile properties, the ratio A/L of the one or more third and/or fourth fibre bundles is as small as possible.

In a possible embodiment the first and/or second helical winding layer extends over dome shaped sections provided at the outer ends of the cylindrical section of the liner. In the dome-shaped sections it may be more difficult to arrange a hoop layer, and in possible embodiments of the invention the first hoop layer may extend only on the cylindrical portion (and not on the dome shaped sections), whilst a helical winding layer extends over the dome shaped sections. A substantially unidirectional layer may be arranged above and/or below the first and/or second helical winding layer. However, it is noted that the substantially unidirectional layer may have a less even thickness on the dome shaped sections.

According to an exemplary embodiment, the third and fourth fibre angle is between 15 and 75 degrees, preferably between 20 and 70 degrees, more preferably between 30 and 60 degrees.

According to an exemplary embodiment, the first hoop layer is formed directly on top of the liner. In that way, the first hoop layer will be able to absorb a larger portion of the radial forces, and the one or more substantially unidirectional layers absorb axial forces.

In a possible embodiment, the various layers are applied in consecutive movement passes, e.g. a first movement pass through a filament winding assembly followed by a second movement pass through a braiding assembly. In a preferred embodiment, a hoop layer is applied by moving the liner through the filament winding assembly, whilst moving the liner through a braiding assembly such that a substantially unidirectional layer is applied after said hoop layer during the same movement pass of the liner. In another embodiment, a substantially unidirectional layer is applied by moving the liner through a braiding assembly, whereupon a hoop layer is applied immediately after the application of said substantially unidirectional layer by a filament winding assembly or a secondary braiding assembly, downstream of the braiding assembly, such that a hoop layer is applied after said substantially unidirectional layer during the same movement pass of the liner.

However, in other embodiments it is possible to use a single braiding machine to apply either a hoop layer or a substantially unidirectional layer or a helical winding layer, wherein the settings of the braiding machine are adjusted in function of the layer to be applied. The outer layer can then be applied by passing the liner a number of times through the same single braiding machine, and by adjusting the settings in accordance with the layer that needs to be arranged.

According to an exemplary embodiment, the filament winding assembly comprises at least one hoop winding head configured to apply a winding layer by rotating the at least one hoop winding head around the liner. According to another embodiment, a secondary braiding assembly may be used to apply the hoop layer. The secondary braiding assembly may be configured to apply the first fibre bundles with a fibre angle between 80 and 100 degrees. In a possible embodiment, the secondary braiding assembly for applying the first fibre bundles comprises weft and warp spools, wherein only the warp spools or only the weft spools may be used. For example, only one warp spool may be operated to apply one first fibre bundle (also called first yarn) with a first fibre angle between 80 and 100 degrees, or a plurality of warp spools may be operated to apply a plurality of first fibre bundles (also called a plurality of first yarns) simultaneously. Optionally a controller may be added to control the spools to be used. However, it is also possible to use a standard braiding assembly and to provide only the spools that need to be used with yarn.

According to an exemplary embodiment, the forming of the one or more hoop layers and substantially unidirectional layers is such that a substantially unidirectional layer is formed directly on top of a hoop layer, and that a further hoop layer is formed directly on top of said substantially unidirectional layer. By having the combination hoop layer - substantially unidirectional layer - further hoop layer, the further hoop layer may compress the substantially unidirectional layer, further improving the strength of the pressure vessel.

According to an exemplary embodiment, the forming of the one or more hoop layers and substantially unidirectional layers is such that a hoop layer is formed directly on top of a substantially unidirectional layer, and that one or more helical winding layers are formed on top of said hoop layer or below said hoop layer, or below said substantially unidirectional layer. By having the combination substantially unidirectional layer - hoop layer - helical winding layer, the strength of the pressure vessel can be further improved.

According to an exemplary embodiment, the one or more first fibre bundles and/or the one or more second fibre bundles and/or the one or more third fibre bundles and/or the one or more second fourth bundles comprise any one or more of the following: dry fibres, fibres in a resin matrix, a commingled yarn comprising fibre filaments and thermoplastic filaments, a thermoplastic prepreg, a tape comprising fibre filaments and a thermoplastic prepreg, a towpreg. Depending on the type of first and/or second bundles that are being used, there may be performed a suitable post-processing of the liner with outer layer, e.g. heating the outer layer, or applying resin around the first and/or second bundles.

According to another aspect of the invention there is provided a pressure vessel comprising a liner having a cylindrical portion and an outer layer around said cylindrical portion, preferably manufactured according to any one of the embodiments of the method disclosed above. The outer layer comprises a resin. The outer layer further comprises:
- at least a first hoop layer of one or more first fibre bundles arranged with a first fibre angle between 80 and 100 degrees with respect to the axial direction of the cylindrical portion;
- at least a first substantially unidirectional layer of one or more second fibre bundles arranged with a second fibre angle between +5 and -5 degrees with respect to the axial direction of the cylindrical portion; wherein the one or more second fibre bundles are arranged adjacent to each other so as to form a continuous first substantially unidirectional layer, preferably with a cover factor of at least 95% such that the first substantially unidirectional layer has a substantially even thickness on the cylindrical portion of the liner.

Preferably, the liner is rigid. More preferably the liner is moulded from any one or more of the following materials: polyamide, high-density polyethylene, a metallic material such as an aluminium base alloy or the like, a thermoplastic coextruded structure.

According to an exemplary embodiment the outer layer further comprises at least a first helical winding layer of one or more third bundles arranged with a third fibre angle between 3 and 80 degrees with respect to the axial direction of the cylindrical portion; wherein the one or more second third bundles are arranged adjacent to each other so as to form a continuous first helical winding layer. More preferably the outer layer further comprises a second helical winding layer of one or more fourth bundles arranged with a fourth fibre angle between 3 and 80 degrees with respect to the axial direction of the cylindrical portion; wherein the one or more fourth bundles are arranged adjacent to each other so as to form a continuous second helical winding layer; wherein the one or more third fibre bundles of the first helical winding layer are oriented in a first direction; and wherein the one or more fourth fibre bundles of the first helical winding layer are oriented in a second direction which is different from the first direction.

According to an exemplary embodiment, the first, second, third and/or fourth fibre angle may be as disclosed above. Also, the crimp of the various fibre bundles may be as defined above.

According to an exemplary embodiment, a substantially unidirectional layer is arranged around a hoop layer. Preferably, a hoop layer is arranged directly around the liner. According to an exemplary embodiment, a further hoop layer is formed directly on top of the substantially unidirectional layer. Furthermore, an example of an apparatus for forming an outer layer around a liner in order to obtain a pressure vessel is disclosed. The apparatus comprises a wrapping assembly configured to form a hoop layer around a liner by wrapping one or more first fibre bundles, with a first fibre angle between 80 and 100 degrees; and a braiding assembly configured to form a substantially unidirectional layer around a liner using one or more second fibre bundles, with a second fibre angle between -5 and 5 degrees. The wrapping assembly and the braiding assembly are arranged in-line such that the hoop layer can be applied by moving the liner through the wrapping assembly in a first direction, whilst moving the liner through the braiding assembly in said first direction such that the substantially unidirectional layer is applied directly after or before the hoop layer during a single first movement pass of the liner. The apparatus may be further configured to move the liner through the wrapping assembly in a second direction opposite to the first direction, whilst moving the liner through the braiding assembly in said second direction such that such that at least one further layer is applied during a single second movement pass of the liner. The at least one further layer may be a further substantially unidirectional layer and/or a further hoop layer. Preferably, the apparatus is configured such that a further substantially unidirectional layer is applied directly after or before a further hoop layer during a single second movement pass of the liner. The wrapping assembly for applying the hoop layer may be a filament winding assembly or a further braiding assembly as will be further explained below.

Preferably, the wrapping assembly comprises at least one hoop winding head configured to apply a winding layer by rotating the at least one hoop winding head around the liner. According to another embodiment, the wrapping assembly may be a braiding assembly configured to apply the first fibre bundles with a fibre angle between 80 and 100 degrees. In a possible embodiment, the further braiding assembly for applying the first fibres comprises weft and warp spools and is operated to rotate only warp spools or only weft spools. For example, only one warp spool may be operated to apply one first fibre bundle (also called first yarn) with a first fibre angle between 80 and 110 degrees, or a plurality of warp spools may be operated to apply a plurality of first fibre bundles (also called a plurality of first yarns) simultaneously.

Preferably, the wrapping assembly, e.g. comprising the at least one winding head, is arranged upstream of the braiding assembly for applying the substantially unidirectional layer, seen in the first direction, such that a substantially unidirectional layer can be applied on a hoop layer. In such an embodiment the wrapping assembly is preferably surrounded at least partially by the braiding assembly, resulting in a compact apparatus which can apply a hoop layer and a substantially unidirectional layer in one movement pass. More in particular, the wrapping assembly may be arranged at least partially in an area delimited by the yarns (i.e. the one or more second fibre bundles) used by the braiding assembly.

Furthermore, an example of a method for forming an outer layer around a liner in order to obtain a pressure vessel is disclosed. The method comprises:
- applying a hoop layer around a liner by moving the liner through a wrapping assembly in a first direction;
- moving the liner through a braiding assembly in said first direction such that a substantially unidirectional layer is applied directly after or before the hoop layer during a single first movement pass of the liner;
- moving the liner through the wrapping assembly in a second direction opposite to the first direction, whilst moving the liner through the braiding assembly in said second direction such that at least one further layer is applied during a single second movement pass of the liner. The at least one further layer may be a further substantially unidirectional layer and/or a further hoop layer. Preferably, a further substantially unidirectional layer is applied directly after or before a further hoop layer during the single second movement pass of the liner.

Such a method has the advantage that a plurality of hoop layers and substantially unidirectional layers can be applied one after the other in a fast manner. Indeed, the liner can be reciprocated through the combination of the wrapping assembly and braiding assembly, such that during each movement pass a hoop layer and/or a substantially unidirectional layer can be applied.

It is noted that the second movement pass may be performed after or before the first movement pass. In other words, there may be applied e.g. the following combinations:
- a combination of a substantially unidirectional layer and hoop layer followed by a combination of a substantially unidirectional layer and hoop layer (e.g. hoop- substantially unidirectional - substantially unidirectional -hoop, hoop- substantially unidirectional -hoop-substantially unidirectional, etc.);
- a combination of a substantially unidirectional layer and hoop layer followed by a substantially unidirectional or hoop layer (e.g. hoop- substantially unidirectional -hoop; hoop- substantially unidirectional - substantially unidirectional, etc.);
- a substantially unidirectional or hoop layer followed by the combination of a substantially unidirectional layer and a hoop layer (e.g. hoop- substantially unidirectional -hoop; hoop-substantially unidirectional - substantially unidirectional, etc.).

The skilled person understands that also one or more wrapping assemblies may be combined with one or more braiding assemblies, such that during each movement pass one or more hoop layers and/or one or more substantially unidirectional layers may be applied. Further, the liner may be reciprocated (in the first/second direction) a number of times depending in the required number of layers.

There may be provided one or more wrapping assemblies for applying one or more helical winding layers. These wrapping assemblies may be combined with the above mentioned wrapping and braiding assembly in a similar manner, such that one or more further helical winding layers are applied below or on top of a hoop layer or a substantially unidirectional layer.

According to an example of this method, the hoop layer is formed by wrapping a first fibre bundle as a dry fibre bundle and/or wherein substantially unidirectional layer is formed using a second fibre bundle as a dry fibre bundle, wherein a resin is applied after forming said hoop layer and/or said substantially unidirectional layer. Alternatively, the first and/or the second fibre bundle may comprise any one of the following: a commingled yarn comprising fibre filaments and thermoplastic filaments, a thermoplastic prepreg, a tape comprising fibre filaments and a thermoplastic prepreg, a towpreg.

For example, the volume of the pressure vessel is between 4 and 150 litres For example, the length of the pressure vessel is between 350 mm and 1500 mm, and the diameter of the vessel is between 100 and 600 mm. The thickness of the liner is typically between 1 and 3 mm. The thickness t of the outer layer is typically between 5 and 50 mm.

For example, the pressure vessel is configured to store any one of the following: hydrogen gas, liquid petroleum gas (LPG), compressed natural gas (CNG), or ammonia.

For example, the liner is moulded from a material having good gas barrier properties, e.g. blow moulded, injection moulded or rotation moulded. For example, the liner is moulded from any one or more of the following materials: polyamide, high-density polyethylene, a metallic material such as an aluminium base alloy or the like, a thermoplastic coextruded structure.

For example, the liner comprises a cylindrical portion and two dome portions formed at both ends of the cylindrical portion. A metal mouth piece may be attached to the top of each dome portion.

For example, the first and/or second and/or third and/or fourth fibre bundles are prepared by bundling fibres, wherein the fibres may be covered with a (fibrous) thermoplastic or thermoset resin. Optionally fibre bundles with different diameters may be used. Alternatively the fibre bundles may be included in a tape material. Suitable reinforcing fibres include: carbon fibres, glass fibres, aramid fibres and the like. For example, the first fibre bundles are prepared as a so-called "towpreg". In this configuration the fibre bundles are prepared by bundling fibres and pre-impregnating the fibres by a thermoset resin.

For example, a conventional braided layer may be applied on the combination of one or more hoop and substantially unidirectional layers in order to avoid that parts burst away.

### Brief description of the figures

The accompanying drawings are used to illustrate presently preferred non-limiting exemplary embodiments of devices of the present invention which is defined by the appended claims. The above and other advantages of the features and objects of the invention will become more apparent and the invention will be better understood from the following detailed description when read in conjunction with the accompanying drawings, in which:
Figure 1 illustrates schematically an exemplary embodiment of a method and apparatus where a substantially unidirectional layer is formed using a braiding assembly;
Figure 2 illustrates schematically an exemplary embodiment of a method and apparatus where a hoop layer is formed in the same movement pass as a substantially unidirectional layer;
Figure 3 illustrates schematically another exemplary embodiment of a method and apparatus where a hoop layer is formed in the same movement pass as a substantially unidirectional layer;
Figure 4 illustrates schematically yet another exemplary embodiment of a method and apparatus where a hoop layer is formed in the same movement pass as a substantially unidirectional layer;
Figure 5 illustrates schematically an embodiment of a pressure vessel in accordance with the invention, wherein only a portion of each layer of the outer layer is shown for illustrative purposes;
Figure 6 illustrates how multiple substantially unidirectional layers may be laid one on top of the other; and
Figure 7 illustrates a method to analyse crimp in fibres.

### Description of embodiments

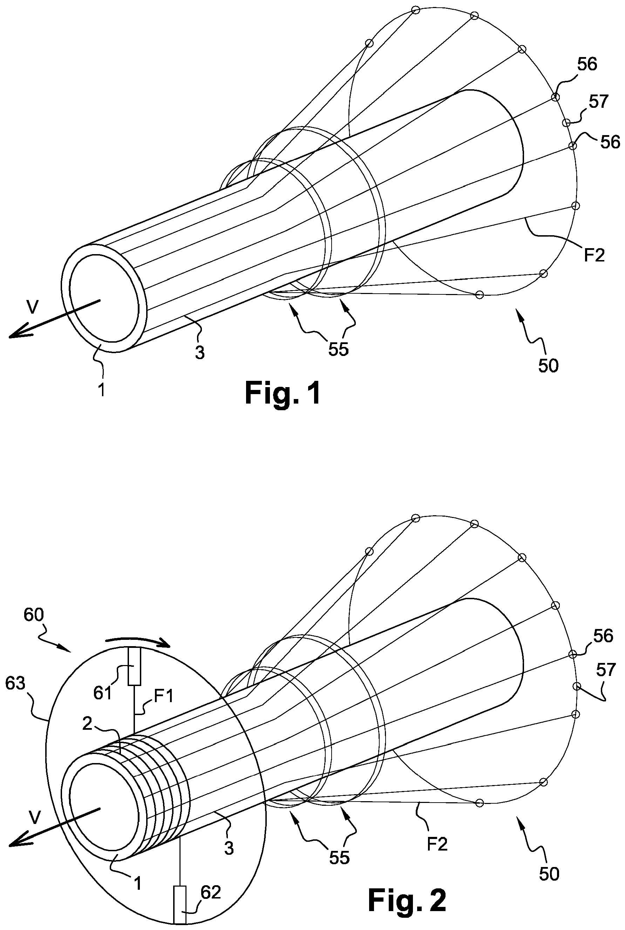

Figure 1 illustrates schematically a method and apparatus for manufacturing a pressure vessel comprising a liner 1 and an outer layer comprising a resin. In the embodiment of figure 1, it is shown how a substantially unidirectional layer 3 is applied on the liner 1. The skilled person understands that in the same manner the substantially unidirectional layer 3 may be laid on a previously applied hoop layer of the outer layer (not shown).

The apparatus of figure 1 comprises a braiding assembly 50 for applying a substantially unidirectional layer 3. The braiding assembly comprises with two guide rings 55 and a plurality of moveable weft and warp spools 56, 57 mounted on carriers (not shown) that move in a spool plane. During a normal braiding operation (not used in figure 1) weft and warp yarns are pulled from the weft and warp spools 56. The warp spools move clockwise while the weft spools move counterclockwise, both with the same speed. The warp and weft yarns interlock, forming a closed biaxial fabric on the mandrel.

In a possible embodiment of the invention one or more second fibre bundles F2 are arranged on a number of spools 56 of the weft and/or warp spools 56, 57, wherein said number of spools 56 are not rotated whilst moving the liner through the braiding machine 50.

In another possible embodiment the braiding machine 50 has a stem yarn application means (not shown) and the one or more second fibre bundles F2 are arranged using the stem yarn application means. In such an embodiment, optionally one or more auxiliary fibre bundles may be arranged on a number of spools of the weft and/or warp spools 56, 57, wherein the one or more auxiliary fibre bundles having a diameter which is at least 5 times less, preferably at least 10 times less than the diameter of the one or more second fibre bundles. The braiding machine 50 may then be operated to perform a conventional braiding operation with the thin auxiliary fibre bundles. By using a thin auxiliary fibre bundle the one or more second fibre bundles F2 may better follow the profile of the liner 1 whilst not significantly increasing the waviness effect. Indeed, because the auxiliary fibre bundles are much thinner, the effect of crossing over the secondary fibre bundles F2 will be very small. It is noted that the use of auxiliary fibre bundles is optional, and it is also possible to apply only the one or more second fibre bundles F2 using the stem yarn application means.

Figure 2 illustrates another embodiment of the method and apparatus. In this embodiment, there is used a machine which combines features of a ring winding machine with features of a braiding machine to combine both processes. The machine comprises a wrapping assembly in the form of a winding assembly 60 with a winding ring 63 with multiple winding heads 61, 62 mounted for being rotated around a liner 1 while liner 1 moves forward in a direction V. The liner 1 moves through the winding ring 63 while the hoop winding heads 61, 62 turn around the liner axis to arrange a hoop winding 2. For the first hoops, the fibres F1 may be held in a fixed position. Dry fibre(s) can be hold e.g. mechanically (e.g. a robot arm with an adapted tool), or by using a binder (blown on the fibres), or stapled, or glued, or welded (if a thermoplastic resin matrix is present). Before entering the winding assembly 60, the liner 1 moves through the guide rings 55 of the braiding assembly 50 which is similar to the braiding assembly of figure 1. In that manner a hoop layer 2 is applied on a substantially unidirectional layer 3.

In another non-illustrated embodiment the same layers may be formed with fixed winding assembly spools 61, 62, if the liner 1 rotates around its axis and if fibres F2 of spools 56, 57 rotate also at the same speed and in the same direction.

In a possible embodiment, the hoop winding fibres F1 are cut at the end of the winding step, when arriving to the opposite section of the liner. Again, dry fibre(s) can be fixed by using a binder (blown on the fibres), or stapled, or glued, or welded (if a thermoplastic resin matrix is present). This will allow achieving an outer layer comprising a hoop layer 2 on top of a substantially unidirectional layer 3.

In a possible embodiment, the hoop winding fibres F1 are positioned on top of the substantially unidirectional layer 3 in order to be able to restart the operation when the cylinder is moving in the opposite direction for the next layers during the process. Depending on the required number of layers the liner 1 may be reciprocated a number of times. This will allow achieving an outer layer comprising e.g. a substantially unidirectional layer, followed by a hoop layer, followed by a hoop layer, followed by a substantially unidirectional layer, etc. Note that it is possible to have a movement pass where only a substantially unidirectional layer or only a hoop layer is applied. The fibres from the hoop layer and/or the substantially unidirectional layer may be cut before reciprocating the movement of the mandrel, in function of the layers to be applied.

In figure 2 the hoop layer and the substantially unidirectional layer are applied using separate assemblies (winding assembly 60 and braiding assembly 50). However, in other embodiments it is possible to use a single braiding machine to apply either a hoop layer or a substantially unidirectional layer or a helical winding layer, wherein the settings of the braiding machine are adjusted in function of the layer to be applied. The outer layer can then be applied by passing the liner a number of times through the same single braiding machine, and by adjusting the settings in accordance with the layer that needs to be arranged.

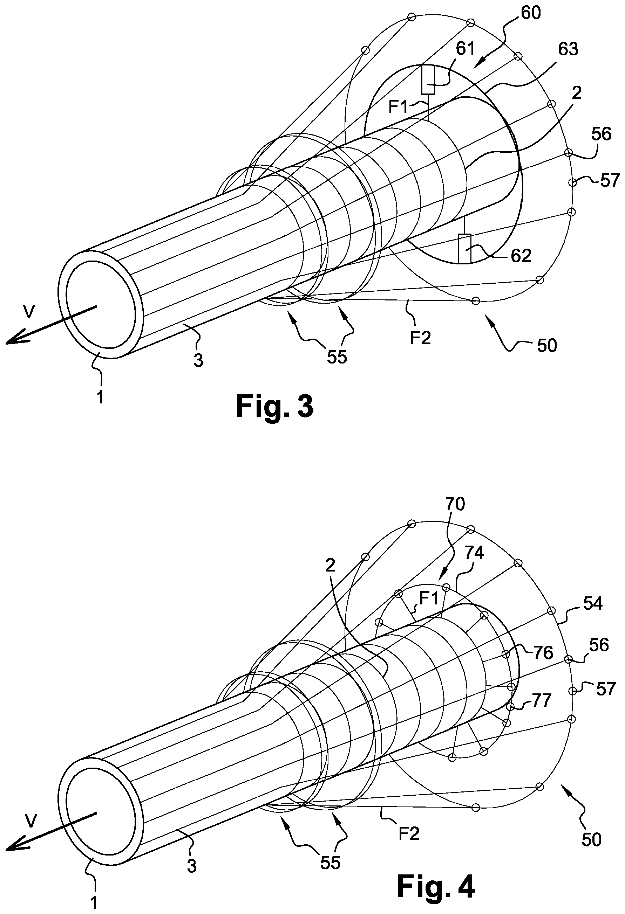

Figure 3 illustrates another embodiment of a method and apparatus, wherein a hoop layer 2 is arranged around a liner 1 in the same movement pass with a substantially unidirectional layer 3. The embodiment is similar to the embodiment of figure 2 with this difference that first the hoop layer 2 is applied and next the substantially unidirectional layer 3. This is achieved by positioning the winding assembly 60 upstream of a zone where the braiding assembly 50 applies the fibre bundles F2 on the liner 1. The winding assembly may be positioned e.g. within a zone delimited by the fibre bundles F2 extending from the spools 56, 57 to the liner 1.

Figure 4 illustrates yet another embodiment of a method and apparatus, wherein a hoop layer 2 is arranged around a liner 1 in the same movement pass with a substantially unidirectional layer 3. The embodiment is similar to the embodiment of figure 2 with this difference that a braiding assembly 70 is used to apply the first fibre bundles F1 for forming the hoop layer 2, instead of the winding assembly 60 which was used in figure 3. The braiding assembly 70 is mounted for braiding a first "hoop" braided layer 2 while liner 1 moves forward in a direction V. The braiding assembly comprises 70 a braiding ring 74 with a plurality of moveable weft and warp spools 76, 77 and one or more guide rings (not shown). For example, only one warp spool 76 may be operated to apply one first fibre bundle F1 (also called first yarn) with a first fibre angle between 80 and 110 degrees, or a plurality of warp spools 76 may be operated to apply a plurality of first fibre bundles F1 (also called a plurality of first yarns) simultaneously.

The other braiding assembly 50 is provided downstream of the braiding assembly 70 such that first a hoop braided layer 2 is applied and then a substantially unidirectional braided layer 3. The configuration may be such that the yarns F2 and/or the guide ring 56 surround the braiding ring 74 of the braiding assembly 70.

The skilled person understands that any number of layers can be realized with such a combined machine, wherein for every movement pass one or more hoop wrapping assemblies 60, 70 and one or more braiding assemblies 50 may be activated.

In yet other embodiments there may be provided one or more wrapping assemblies for applying one or more helical winding layers. These wrapping assemblies may be combined with the above mentioned wrapping and braiding assembly in a similar manner, such that one or more further helical winding layers are applied below or on top of a hoop layer or a substantially unidirectional layer.

In other exemplary embodiments, a fibre reinforced tape may be used for the hoop winding. Such a tape may be welded and compressed using a roller on the mandrel to ensure a correct winding.

The process combining the substantially unidirectional and hoop layers may be a dry process. After such a dry process four options can be considered. Firstly, if a thermoplastic matrix is included in the yarn, e.g. if commingled yarns are used, then a bladder inflation moulding process may be used for the manufacturing and consolidation of the composite reinforcement. Secondly, if dry yarns are used, a resin transfer moulding (RTM) process or the like may be used for the manufacturing and consolidation of the composite reinforcement. Thirdly, if a towpreg based yarn is used, a consolidation process based on heating may be applied. Fourthly, if dry yarns are used, the consolidation can be based on reactive thermoplastic polymerization, RTM (Resin Transfer Molding), or infusion of a thermoset or thermoplastic resin matrix.

In an exemplary embodiment, the braiding assembly 50 may be configured to braid the total surface of the liner 1, while the winding assembly 60 or the braiding assembly 70 may be used to cover only the cylindrical area of the liner 1 with hoops, preferably at 90° +/-10°.

It is noted that conventional braiding assemblies may be used in embodiments of the inventions. In such a braiding assembly the spools may be oriented parallel to the movement direction V, or may be oriented in a radial direction perpendicular to the movement direction V. In yet other embodiments the spools may be oriented under an angle with respect to the movement direction V.

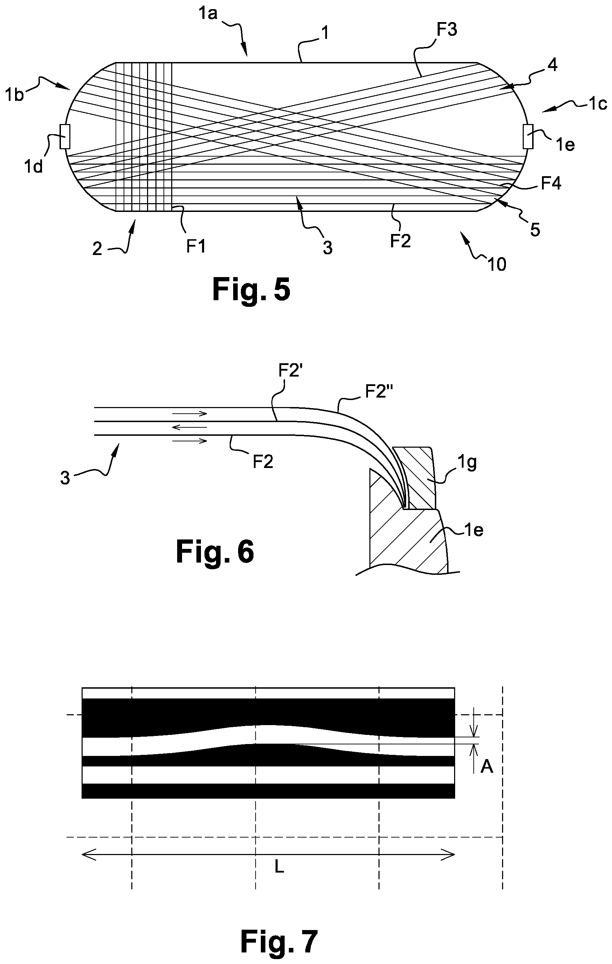

Figure 5 illustrates a pressure vessel 10 comprising a liner 1 and an outer layer comprising a hoop layer 2 made of one or more first fibre bundles F1, a substantially unidirectional layer 3 made of one or more second fibre bundles F2, and two winding layers 4, 5 made of one or more third and fourth fibre bundles F3, F4. Preferably, the hoop layer 2 comprises a winding with a first fibre angle α between 85 and 95 degrees with respect to the axial direction of the liner. In that way, the hoop layer 2 allows a good absorption of the radial forces, and the substantially unidirectional layer 3 absorb the axial forces.

The total thickness d of the outer layer is typically between 5 and 50 mm, depending on the diameter of the pressure vessel and the required strength.

According to an exemplary embodiment, the one or more first/second/third/fourth fibre bundles F1, F2, F3, F4, comprise any one or more of the following: dry fibres, fibres in a resin matrix, a commingled yarn comprising fibre filaments and thermoplastic filaments, a thermoplastic prepreg, a tape comprising fibre filaments and a thermoplastic prepreg, a towpreg, etc.

In the exemplary embodiments above, the liner 1 may be moulded from a material having good gas barrier properties, e.g. blow moulded, injection moulded or rotation moulded. In an exemplary embodiment, the liner 1 is moulded by a blow moulding method using polyamide in order to obtain a liner with a good dimensional stability and chemical resistance as well as good gas barrier properties. The material to form the liner is not limited to polyamide. For example, any thermoplastic material having good gas barrier properties such as high-density polyethylene or the like, or metallic materials such as aluminium base alloys or the like may also be used to prepare the liner. The liner 1 may also consist of a multilayer structure.

The liner 1 comprises a cylindrical portion 1a and two dome portions 1b, 1c formed at both ends of the cylindrical portion 1a. A metal mouth piece (also called boss) 1d, 1e may be attached to the top of each dome portion 1b, 1c.

Figure 6 illustrates an embodiment with an outer layer comprising three substantially unidirectional layers 3 applied in three consecutive passes using fibre bundle F2, F2', F2". In order to limit the movement of the fibre bundles F2, F2', F2" a counterpart 1g may be fixed on the boss 1e to ensure the positioning of the fibres. The fibre bundles F2, F2', F2" can be ended by cutting when arriving at the boss 1e or they may be bended in order to be laid in the opposite direction. Below or above the unidirectional layers 3 a hoop layer may be present (not shown).

Fibre bundles for a hoop layer 2 may be prepared as follows. Carbon fibres are bundled to prepare a fibre bundle and may be covered with a (fibrous) thermoplastic or thermoset resin. In exemplary embodiments of the invention, fibre bundles with different diameters may be used. Alternatively, the fibre bundles may be included in a tape material. Also other reinforcing fibres such as glass fibres, aramid fibres or the like may be used. Optionally, the outer portion of carbon fibres may be protected by covering them with glass fibres or the like.

According to an exemplary embodiment, the one or more first, second, third and/or fourth fibre bundles F1, F2, F3, F4 are arranged such that the crimp thereof is minimized. A method to analyse crimp is illustrated in figure 7. To analyse crimp a sample of the outer wall is cut and the lay-up thereof is observed under a microscope. When A is the "height" of the wave of a fibre, i.e. the deviation of the centre of the fibre compared to the centre of a fibre in a straight direction, and L is the "length" of the wave, see figure 7, then preferably A/L < 0,03 and more preferably A/L < 0,01. Even more preferably, to minimize the effect of the crimp on the tensile properties, the ratio A/L is as small as possible.

According to an exemplary embodiment, the cover factor of the first substantially unidirectional layer is at least 95%, preferably at least 98%, more preferably 100%. This will further enhance the absorption of the axial forces with a minimal amount of fibres. Also, the cover factor of the hoop layer is at least 95%, preferably at least 98%, more preferably 100%.

In exemplary embodiments, the length of the pressure vessel 10 is between 350 mm and 1500 mm, and the diameter of the vessel is between 100 and 600 mm. The thickness of the liner is typically between 1 and 3 mm. The thickness d of the outer layer is typically between 5 and 50 mm.

Whilst the principles of the invention have been set out above in connection with specific embodiments, it is to be understood that this description is merely made by way of example and not as a limitation of the scope of protection which is determined by the appended claims.

## Claims

1. A method for forming an outer layer around a cylindrical portion of a liner (1), in order to obtain a pressure vessel (10), said method comprising:
forming at least a first hoop layer (2) of one or more first fibre bundles (F1) arranged with a first fibre angle between 80 and 100 degrees with respect to the axial direction of the cylindrical portion;
forming at least a first substantially unidirectional layer (3) of one or more second fibre bundles (F2) arranged with a second fibre angle between +5 and -5 degrees with respect to the axial direction of the cylindrical portion; wherein the one or more second fibre bundles (F2) are laid adjacent to each other so as to form a continuous first substantially unidirectional layer;
wherein the forming of the first substantially unidirectional layer (3) is done using a braiding machine (50).

2. The method according to claim 1, wherein the braiding machine (50) has weft spools and warp spools (56, 57), and wherein the one or more second fibre bundles (F2) are arranged on a number of spools of the weft and/or warp spools (56, 57), and wherein said number of spools are not rotated whilst moving the liner (1) through the braiding machine (50).

3. The method according to claim 1, wherein the braiding machine (50) has a stem yarn application means and wherein one or more second fibre bundles (F2) are arranged using the stem yarn application means.

4. The method according to claim 3, wherein the braiding machine has weft spools and warp spools (56, 57), and wherein one or more auxiliary fibre bundles are arranged on a number of spools of the weft and/or warp spools (56, 57), said one or more auxiliary fibre bundles having a diameter which is at least 5 times less, preferably at least 10 times less than the diameter of the one or more second fibre bundles (F2).

5. The method according to any one of the previous claims, wherein the forming of at least a first substantially unidirectional layer (3) comprises forming of multiple substantially unidirectional layers by reciprocating the liner (1) in the braiding machine (50).

6. The method according to any one of the previous claim, further comprising forming at least a first helical winding layer (4) of one or more third bundles (F3) arranged with a third fibre angle between 3 and 80 degrees with respect to the axial direction of the cylindrical portion; wherein the one or more third bundles are arranged adjacent to each other so as to form a continuous first helical winding layer.

7. The method according to the previous claim, further comprising forming a second helical winding layer (5) of one or more fourth bundles (F4) arranged with a fourth fibre angle between 3 and 80 degrees with respect to the axial direction of the cylindrical portion; wherein the one or more fourth bundles (F4) are arranged adjacent to each other so as to form a continuous second helical winding layer; wherein the one or more third fibre bundles (F3) of the first helical winding layer are oriented in a first direction; and wherein the one or more fourth fibre bundles (F4) of the first helical winding layer are oriented in a second direction which is different from the first direction.

8. The method according to any one of the previous claims, wherein the forming of at least the first hoop layer (2) is done with a braiding assembly comprising weft and warp spools (56, 57), wherein only one or more warp spools or only one or more weft spools are used to apply the one or more first fibre bundles (F1).

9. The method according to any one of the claims 1-7, wherein the forming of at least the first hoop layer (2) is done using a filament winding assembly, and wherein the liner (1) is rotated whilst moving through the filament winding assembly.

10. The method of any one of the previous claims, wherein the cover factor of the first substantially unidirectional layer is at least 95%, preferably at least 98%, more preferably 100%;

11. The method of any one of the previous claims, wherein, for any portion of the second fibre bundles (F2), when A is the deviation of the centre of the second fibre bundles compared to the centre of the second fibre bundles in the axial direction, and L is the length of the wave in the axial direction, then A/L < 0,03 and more preferably A/L < 0,0

12. A pressure vessel (10) comprising a liner (1) having a cylindrical portion and an outer layer around said cylindrical portion, said outer layer comprising a resin, said outer layer further comprising:
at least a first hoop layer (2) of one or more first fibre bundles (F1) arranged with a first fibre angle between 80 and 100 degrees with respect to the axial direction of the cylindrical portion;
at least a first substantially unidirectional layer (3) of one or more second fibre bundles (F2) arranged with a second fibre angle between +5 and -5 degrees with respect to the axial direction of the cylindrical portion; wherein the one or more second fibre bundles (F2) are arranged adjacent to each other so as to form a continuous first substantially unidirectional layer.

13. The pressure vessel according to claim 12, wherein the liner (1) is moulded from any one or more of the following materials: polyamide, high-density polyethylene, a metallic material such as an aluminium base alloy or the like, a thermoplastic coextruded structure.

14. The pressure vessel according to claim 12 or 13, wherein the outer layer further comprises at least a first helical winding layer (4) of one or more third bundles (F3) arranged with a third fibre angle between 3 and 80 degrees with respect to the axial direction of the cylindrical portion; wherein the one or more third bundles (F3) are arranged adjacent to each other so as to form a continuous first helical winding layer.

15. The pressure vessel according to claim 14, wherein the outer layer further comprises a second helical winding layer (5) of one or more fourth bundles (F4) arranged with a fourth fibre angle between 3 and 80 degrees with respect to the axial direction of the cylindrical portion; wherein the one or more fourth bundles (F4) are arranged adjacent to each other so as to form a continuous second helical winding layer; wherein the one or more third fibre bundles (F3) of the first helical winding layer are oriented in a first direction; and wherein the one or more fourth fibre bundles (F4) of the first helical winding layer are oriented in a second direction which is different from the first direction.

16. The pressure vessel according to any one of the claims 12-15, wherein the first fibre angle is between 85 and 95 degrees; and/or wherein the second fibre angle is between -3 and 3 degrees, more preferably between -2 and 2 degrees.

## Patentansprüche

1. Verfahren zum Bilden einer äußeren Schicht um einen zylindrischen Abschnitt eines Liners (1), um einen Druckbehälter (10) zu erhalten, wobei das Verfahren aufweist:
Bilden mindestens einer ersten Umfangslage (2) aus einem oder mehreren ersten Faserbündeln (F1), die mit einem ersten Faserwinkel zwischen 80 und 100 Grad in Bezug auf die axiale Richtung des zylindrischen Abschnitts angeordnet sind;
Bilden mindestens einer ersten im Wesentlichen unidirektionalen Lage (3) aus einem oder mehreren zweiten Faserbündeln (F2), die mit einem zweiten Faserwinkel zwischen +5 und -5 Grad in Bezug auf die axiale Richtung des zylindrischen Abschnitts angeordnet sind; wobei das eine oder die mehreren zweiten Faserbündel (F2) benachbart zueinander angeordnet werden, um eine kontinuierliche erste im Wesentlichen unidirektionale Lage zu bilden;
wobei die Bildung der ersten im Wesentlichen unidirektionalen Lage (3) unter Verwendung einer Flechtmaschine (50) erfolgt.

2. Verfahren nach Anspruch 1, wobei die Flechtmaschine (50) Schuss- und Kettspulen (56, 57) aufweist, und wobei das eine oder die mehreren zweiten Faserbündel (F2) auf einer Anzahl von Spulen der Schuss- und/oder Kettspulen (56, 57) angeordnet sind, und wobei diese Anzahl von Spulen nicht gedreht wird, während der Liner (1) durch die Flechtmaschine (50) bewegt wird.

3. Verfahren nach Anspruch 1, wobei die Flechtmaschine (50) ein Stammgarnauftragsmittel aufweist und wobei ein oder mehrere zweite Faserbündel (F2) unter Verwendung des Stammgarnauftragsmittels angeordnet werden.

4. Verfahren nach Anspruch 3, wobei die Flechtmaschine Schuss- und Kettspulen (56, 57) aufweist, und wobei ein oder mehrere Hilfsfaserbündel auf einer Anzahl von Spulen der Schuss- und/oder Kettspulen (56, 57) angeordnet sind, wobei das eine oder die mehreren Hilfsfaserbündel einen Durchmesser aufweisen, der mindestens 5-mal kleiner, vorzugsweise mindestens 10-mal kleiner als der Durchmesser des einen oder der mehreren zweiten Faserbündel (F2) ist.

5. Verfahren nach einem der vorhergehenden Ansprüche, wobei das Bilden mindestens einer ersten im Wesentlichen unidirektionalen Lage (3) das Bilden mehrerer im Wesentlichen unidirektionaler Lagen durch Hin- und Herbewegen des Liners (1) in der Flechtmaschine (50) umfasst.

6. Verfahren nach einem der vorhergehenden Ansprüche, das ferner die Bildung mindestens einer ersten schraubenförmigen Wickellage (4) aus einem oder mehreren dritten Bündeln (F3) umfasst, die mit einem dritten Faserwinkel zwischen 3 und 80 Grad in Bezug auf die axiale Richtung des zylindrischen Teils angeordnet sind;
wobei das eine oder die mehreren dritten Bündel benachbart zueinander angeordnet sind, um eine kontinuierliche erste schraubenförmige Wickellage zu bilden.

7. Verfahren nach dem vorhergehenden Anspruch, das ferner die Bildung einer zweiten schraubenförmigen Wickellage (5) aus einem oder mehreren vierten Faserbündeln (F4) umfasst, die mit einem vierten Faserwinkel zwischen 3 und 80 Grad in Bezug auf die axiale Richtung des zylindrischen Abschnitts angeordnet sind; wobei das eine oder die mehreren vierten Faserbündel (F4) benachbart zueinander angeordnet sind, um eine kontinuierliche zweite schraubenförmige Wickellage zu bilden; wobei das eine oder die mehreren dritten Faserbündel (F3) der ersten schraubenförmigen Wickellage in einer ersten Richtung ausgerichtet sind; und wobei das eine oder die mehreren vierten Faserbündel (F4) der ersten schraubenförmigen Wickellage in einer zweiten Richtung ausgerichtet sind, die sich von der ersten Richtung unterscheidet.

8. Verfahren nach einem der vorhergehenden Ansprüche, wobei die Bildung mindestens der ersten Umfangslage (2) mit einer Flechtanordnung erfolgt, die Schuss- und Kettspulen (56, 57) aufweist, wobei nur eine oder mehrere Kettspulen oder nur eine oder mehrere Schussspulen verwendet werden, um das eine oder mehrere erste Faserbündel (F1) aufzubringen.

9. Verfahren nach einem der Ansprüche 1 bis 7, wobei das Bilden mindestens der ersten Umfangslage (2) unter Verwendung einer Filamentwickelvorrichtung erfolgt und wobei der Liner (1) gedreht wird, während sie sich durch die Filamentwickelvorrichtung bewegt.

10. Verfahren nach einem der vorhergehenden Ansprüche, wobei der Deckungsfaktor der ersten im Wesentlichen unidirektionalen Lage mindestens 95 %, vorzugsweise mindestens 98 %, noch bevorzugter 100 % beträgt.

11. Verfahren nach einem der vorhergehenden Ansprüche, bei dem für einen beliebigen Abschnitt der zweiten Faserbündel (F2), wenn A die Abweichung der Mitte der zweiten Faserbündel im Vergleich zur Mitte der zweiten Faserbündel in axialer Richtung und L die Länge der Welle in axialer Richtung ist, A/L < 0,03 und vorzugsweise A/L < 0,0 ist.

12. Druckbehälter (10) mit einem Liner (1), der einen zylindrischen Abschnitt und eine äußere Schicht um den zylindrischen Abschnitt herum aufweist, wobei die äußere Schicht ein Harz aufweist, wobei die Schicht ferner Folgendes aufweist:
mindestens eine erste Umfangslage (2) aus einem oder mehreren ersten Faserbündeln (F1), die mit einem ersten Faserwinkel zwischen 80 und 100 Grad in Bezug auf die axiale Richtung des zylindrischen Abschnitts angeordnet sind;
mindestens eine erste im Wesentlichen unidirektionale Lage (3) aus einem oder mehreren zweiten Faserbündeln (F2), die mit einem zweiten Faserwinkel zwischen +5 und -5 Grad in Bezug auf die axiale Richtung des zylindrischen Abschnitts angeordnet sind; wobei das eine oder die mehreren zweiten Faserbündel (F2) benachbart zueinander angeordnet sind, um eine kontinuierliche erste im Wesentlichen unidirektionale Lage zu bilden.

13. Druckbehälter nach Anspruch 12, wobei der Liner (1) aus einem oder mehreren der folgenden Materialien geformt ist: Polyamid, Polyethylen hoher Dichte, ein metallisches Material wie eine Legierung auf Aluminiumbasis oder dergleichen, eine thermoplastische koextrudierte Struktur.

14. Druckbehälter nach Anspruch 12 oder 13, wobei die äußere Schicht ferner mindestens eine erste schraubenförmige Wickellage (4) aus einem oder mehreren dritten Bündeln (F3) aufweist, die mit einem dritten Faserwinkel zwischen 3 und 80 Grad in Bezug auf die axiale Richtung des zylindrischen Abschnitts angeordnet sind; wobei das eine oder die mehreren dritten Bündel (F3) benachbart zueinander angeordnet sind, um eine durchgehende erste schraubenförmige Wickellage zu bilden.

15. Druckbehälter nach Anspruch 14, wobei die äußere Schicht ferner eine zweite schraubenförmige Wickellage (5) aus einem oder mehreren vierten Faserbündeln (F4) aufweist, die mit einem vierten Faserwinkel zwischen 3 und 80 Grad in Bezug auf die axiale Richtung des zylindrischen Abschnitts angeordnet sind; wobei das eine oder die mehreren vierten Faserbündel (F4) benachbart zueinander angeordnet sind, um eine kontinuierliche zweite schraubenförmige Wickellage zu bilden; wobei das eine oder die mehreren dritten Faserbündel (F3) der ersten schraubenförmigen Wickellage in einer ersten Richtung ausgerichtet sind; und wobei das eine oder die mehreren vierten Faserbündel (F4) der ersten schraubenförmigen Wickellage in einer zweiten Richtung ausgerichtet sind, die sich von der ersten Richtung unterscheidet.

16. Druckbehälter nach einem der Ansprüche 12-15, wobei der erste Faserwinkel zwischen 85 und 95 Grad liegt; und/oder wobei der zweite Faserwinkel zwischen - 3 und 3 Grad, vorzugsweise zwischen -2 und 2 Grad liegt.

## Revendications

1. Procédé de formage d'une couche externe autour d'une partie cylindrique d'un liner (1), afin d'obtenir un réservoir sous pression (10), ledit procédé comprenant les étapes de :
former au moins une première couche annulaire (2) d'un ou plusieurs premiers faisceaux de fibres (F1) disposés avec un premier angle de fibre compris entre 80 et 100 degrés par rapport à la direction axiale de la partie cylindrique ;
former au moins une première couche sensiblement unidirectionnelle (3) d'un ou de plusieurs deuxièmes faisceaux de fibres (F2) disposés avec un deuxième angle de fibre compris entre +5 et -5 degrés par rapport à la direction axiale de la partie cylindrique ;
dans lequel le ou les deuxièmes faisceaux de fibres (F2) sont posés l'un à côté de l'autre de manière à former une première couche continue sensiblement unidirectionnelle ;
dans lequel le formage de la première couche sensiblement unidirectionnelle (3) est effectué à l'aide d'une machine à tresser (50).

2. Procédé selon la revendication 1, dans lequel la machine à tresser (50) comporte des bobines de trame et des bobines de chaîne (56, 57), et dans lequel le ou les deuxièmes faisceaux de fibres (F2) sont disposés sur un nombre de bobines de trame et/ou de bobines de chaîne (56, 57), et dans lequel ledit nombre de bobines n'est pas tourné lors du déplacement du liner (1) à travers la machine à tresser (50).

3. Procédé selon la revendication 1, dans lequel la machine à tresser (50) comprend un moyen d'application de fil de tige et dans lequel un ou plusieurs deuxièmes faisceaux de fibres (F2) sont disposés à l'aide des moyens d'application de fil de tige.

4. Procédé selon la revendication 3, dans lequel la machine à tresser comporte des bobines de trame et des bobines de chaîne (56, 57), et dans lequel un ou plusieurs faisceaux de fibres auxiliaires sont disposés sur un nombre de bobines de trame et/ou de bobines de chaîne (56, 57), le ou les faisceaux de fibres auxiliaires ayant un diamètre au moins 5 fois inférieur, de préférence au moins 10 fois inférieur au diamètre du ou des deuxièmes faisceaux de fibres (F2).

5. Procédé selon l'une quelconque des revendications précédentes, dans lequel le formage d'au moins une première couche sensiblement unidirectionnelle (3) comprend le formage de plusieurs couches sensiblement unidirectionnelles par mouvement alternatif du liner (1) dans la machine à tresser (50).

6. Procédé selon l'une quelconque des revendications précédentes, comprenant en outre le formage d'au moins une première couche d'enroulement hélicoïdale (4) d'un ou de plusieurs troisièmes faisceaux (F3) disposés avec un troisième angle de fibre compris entre 3 et 80 degrés par rapport à la direction axiale de la partie cylindrique ; dans lequel le ou les troisièmes faisceaux sont disposés côte à côte de manière à former une première couche d'enroulement hélicoïdale continue.

7. Procédé selon la revendication précédente, comprenant en outre le formage d'une seconde couche d'enroulement hélicoïdale (5) d'un ou de plusieurs quatrièmes faisceaux (F4) disposés avec un quatrième angle de fibre compris entre 3 et 80 degrés par rapport à la direction axiale de la partie cylindrique ; dans lequel le ou les quatrièmes faisceaux (F4) sont disposés l'un à côté de l'autre de manière à former une seconde couche d'enroulement hélicoïdale continue ; dans lequel le ou les troisièmes faisceaux de fibres (F3) de la première couche d'enroulement hélicoïdale sont orientés dans une première direction ; et dans lequel le ou les quatrièmes faisceaux de fibres (F4) de la première couche d'enroulement hélicoïdale sont orientés dans une seconde direction qui est différente de la première direction.

8. Procédé selon l'une quelconque des revendications précédentes, dans lequel le formage d'au moins la première couche annulaire (2) est réalisée à l'aide d'un ensemble de tressage comprenant des bobines de trame et de chaîne (56, 57), dans lequel une ou plusieurs bobines de chaîne ou une ou plusieurs bobines de trame sont utilisées pour appliquer le ou les premiers faisceaux de fibres (F1).

9. Procédé selon l'une quelconque des revendications 1 à 7, dans lequel le formage d'au moins la première couche annulaire (2) est effectuée à l'aide d'un ensemble d'enroulement de filament, et dans lequel le liner (1) est tourné tout en se déplaçant à travers l'ensemble d'enroulement de filament.

10. Procédé selon l'une quelconque des revendications précédentes, dans lequel le facteur de couverture de la première couche sensiblement unidirectionnelle est d'au moins 95 %, de préférence d'au moins 98 %, de préférence de 100 %.

11. Procédé selon l'une quelconque des revendications précédentes, dans lequel, pour toute partie des deuxièmes faisceaux de fibres (F2), lorsque A est la déviation du centre des deuxièmes faisceaux de fibres par rapport au centre des deuxièmes faisceaux de fibres dans la direction axiale, et que L est la longueur de l'onde dans la direction axiale, alors A/L < 0,03, de préférence A/L < 0,0

12. Réservoir sous pression (10) comprenant un liner (1) ayant une partie cylindrique et une couche externe autour de ladite partie cylindrique, ladite couche externe comprenant une résine, ladite couche externe comprenant en outre :
au moins une première couche annulaire (2) d'un ou de plusieurs premiers faisceaux de fibres (F1) disposés avec un premier angle de fibre compris entre 80 et 100 degrés par rapport à la direction axiale de la partie cylindrique ;
au moins une première couche sensiblement unidirectionnelle (3) d'un ou plusieurs deuxièmes faisceaux de fibres (F2) disposés avec un deuxième angle de fibre compris entre +5 et -5 degrés par rapport à la direction axiale de la partie cylindrique ; dans lequel le ou les deuxièmes faisceaux de fibres (F2) sont disposés l'un à côté de l'autre de manière à former une première couche continue sensiblement unidirectionnelle.

13. Réservoir sous pression selon la revendication 12, dans lequel le liner (1) est moulé à partir d'un ou de plusieurs des matériaux suivants : polyamide, polyéthylène haute densité, un matériau métallique tel qu'un alliage à base d'aluminium ou similaire, une structure coextrudée thermoplastique.

14. Réservoir sous pression selon la revendication 12 ou 13, dans lequel la couche externe comprend en outre au moins une première couche d'enroulement hélicoïdale (4) d'un ou plusieurs troisièmes faisceaux (F3) disposés avec un troisième angle de fibre compris entre 3 et 80 degrés par rapport à la direction axiale de la partie cylindrique ; dans lequel le ou les troisièmes faisceaux (F3) sont disposés côte à côte de manière à former une première couche d'enroulement hélicoïdale continue.

15. Réservoir sous pression selon la revendication 14, dans lequel la couche externe comprend en outre une seconde couche d'enroulement hélicoïdale (5) d'un ou plusieurs quatrièmes faisceaux (F4) disposés avec un quatrième angle de fibre compris entre 3 et 80 degrés par rapport à la direction axiale de la partie cylindrique ; dans lequel le ou les quatrièmes faisceaux (F4) sont disposés l'un à côté de l'autre de manière à former une seconde couche d'enroulement hélicoïdale continue ; dans lequel le ou les troisièmes faisceaux de fibres (F3) de la première couche d'enroulement hélicoïdale sont orientés dans une première direction ; et dans lequel le ou les quatrièmes faisceaux de fibres (F4) de la première couche d'enroulement hélicoïdale sont orientés dans une seconde direction qui est différente de la première direction.

16. Réservoir sous pression selon l'une quelconque des revendications 12 à 15, dans lequel le premier angle de fibre est compris entre 85 et 95 degrés ; et/ou dans lequel le deuxième angle de fibre est compris entre -3 et 3 degrés, de préférence entre -2 et 2 degrés.
